# EUROPEAN PATENT APPLICATION

(11) **EP 2 226 698 A2**
(43) Date of publication of application: **08.09.2010**
(21) Application number: 09175207.1
(22) Date of filing: 06.11.2009
(51) Int. Cl.: G05D 23/24

(54) **A thermostat for white goods**

(30) Priority: 30.12.2008 TR 200810051
(71) Applicant: Vestel Beyaz Esya Sanayi Ve Ticaret A.S., 45030 Manisa (TR)
(72) Inventor: Tosun, Kerem, 35150 IZMIR (TR); Çinar, Seylan, 35540 IZMIR (TR)
(74) Representative: Cayli, Hülya

(57) **Abstract**

This invention is related to a white good comprising a heating/cooling element (5); a switching circuit (4) that regulates the feeding of this element (5) from the mains (7, 8); a thermostat checking this circuit for the cabin internal temperature. The said thermostat here comprises at least one temperature detector (1.1) whose resistance changes with temperature, a voltage divider (1.2) serially connected with the temperature detector (1.1), an adjustable resistor (2.1); and an operational amplifier (3) one of the inputs of which is connected between the temperature detector (1.1) and voltage divider (1.2) and the other is connected to the adjustable resistor (2.1) and output of which is connected to the switching circuit (4).

## Description

### Technical Field

This invention relates to the electronic thermostats with cabin internal temperature controller in the household type white goods.

### Prior Art

In the state of art, mechanical thermostats are used in order to keep the cabin internal temperature at a desired level in household type white goods, particularly in coolers. Mechanical thermostats consist of a chamber which contains gas, a capillary tube, a diaphragm and an electrical contact. The pressure of the gas in the chamber changes depending on the cabin internal temperature, this pressure is conveyed to the diaphragm by means of the capillary tube, the diaphragm switches on or off the contact, extending or contracting in accordance with the pressure. However, the mounting of these systems on white goods is quite difficult and the costs are high. Furthermore, the sensitivity of the temperature control is low since the temperature changes are converted to the pressure change signals and then are sent to the electrical contacts by means of the various conduction means connected in cascade, and the changes in the characteristics of the conduction means due to aging cause a further decrease in the sensitivity of the control mechanism throughout its physical life.

In the art which is disclosed in the published patent application no GB1172937 of the state of art, the cabin internal temperature control process for coolers is electronically performed. In the said art, the use of Schmitt trigger circuit with transistors is described. By setting the thyristor, serially connected with the engine, to active or cut-off position according to the temperature signal sent from the temperature detector (thermistor) in the said art, Schmitt trigger circuit enables the engine to run or stop.

In the art disclosed in the application no GB1172937, adjustment of control value of the cabin internal temperature (temperature set value) by the user is impossible, and the temperature control value must be determined during the manufacture of the electronic circuit.

As the number of the electronic circuit elements used in the electronic circuits increases, the error margin stemming from the manufacture of the electronic circuit elements increases the total error margin. Since a large number of electronic circuit elements are used in the art disclosed in the application no GB1172937, the control error amount increases, the mounting of the electronic card gets harder due to its size, the cost increases and the amount of heat radiated to the environment, which is intended to be cooled, is higher.

In the art disclosed in the application no GB1172937" between the alive zone (the engines used in the coolers are fed from the mains) and the control circuit, there is an electrical connection established by means of the thyristor. In case of a breakdown of the thyristor, the control circuit may also become alive and the said situation may both endanger the users and lead to malfunction of the temperature control circuit.

### Brief Description of Invention

The white good according to the present invention comprises a heating and/ or cooling element for the adjustment of cabin internal temperature; switching circuit that regulates the feeding of this element from the mains, and a thermostat that checks this circuit. This thermostat comprises at least one temperature detector whose resistance changes with temperature, a voltage divider serially connected with the temperature detector, an adjustable resistor, and an operational amplifier, one of the inputs of which is connected between the temperature detector and voltage divider and the other is connected to the adjustable resistor and output of which is connected to the switching circuit. There is also provided a feedback resistor connected parallel to the amplifier in the thermostat, so as to be between the output of the operational amplifier and the input coming from the detector. A power supply is used for feeding the circuit elements.

In the art disclosed in the invention, details of which are given below, the operation of the heating and/or cooling element is ensured by setting a switching element connected to the heating/cooling element to on or off position, according to the temperature data sent from the temperature detector (NTC thermistor, PTC thermistor, RTD) to the comparator circuit element.

This invention also allows adjustment of the cabin internal temperature depending on user's demand; as fewer electronic circuit elements are used, it provides a more sensitive control compared to the state of art; and mounting becomes easy due to the smaller size of the electronic card that is to be formed with the invention. Furthermore, the card radiates less heat to the environment that is intended to be cooled and its cost is lower.

### Aim of Invention

The aim of this invention is to form a thermostat which ensures adjustment of the cabin internal temperature for white goods according to the temperature data sent from the temperature detector (NTC thermistor, PTC thermistor, RTD) to the comparator circuit element.

Another aim of the invention is to ensure adjustment of the cabin internal temperature depending on user's demand by means of the said thermostat.

A further aim of the invention is to provide a more sensitive temperature control, using fewer electronic circuits compared to the state of art; and to form an easy-to-mount, cost-effective and reliable thermostat.

### Description of Drawings

An exemplary thermostat for white goods according to the present invention is illustrated in the annexed drawings; wherein;
Figure 1 is the block diagram of the thermostat that ensures temperature control.
Figure 2 is the circuit diagram of the thermostat.

The parts in the figures are individually enumerated and the corresponding terms of these numbers are given below:
Temperature detection circuit (1)
Temperature detector (1.1)
Voltage divider (1.2)
Temperature adjustment circuit (2)
Adjustable resistor (Potentiometer) (2.1)
Operational amplifier (Op-Amp) (3)
Switching circuit (4)
Switching element (4.1)
Protection diode (4.2)
Heating and/or cooling element (5)
Feedback circuit (6)
Feedback resistor (6.1)
Mains (7, 8)
Power supply (9)

### Disclosure of Invention

The electronic thermostat formed by the art disclosed in the invention makes the cabin internal temperatures of the household type white goods usable within the desired value ranges.

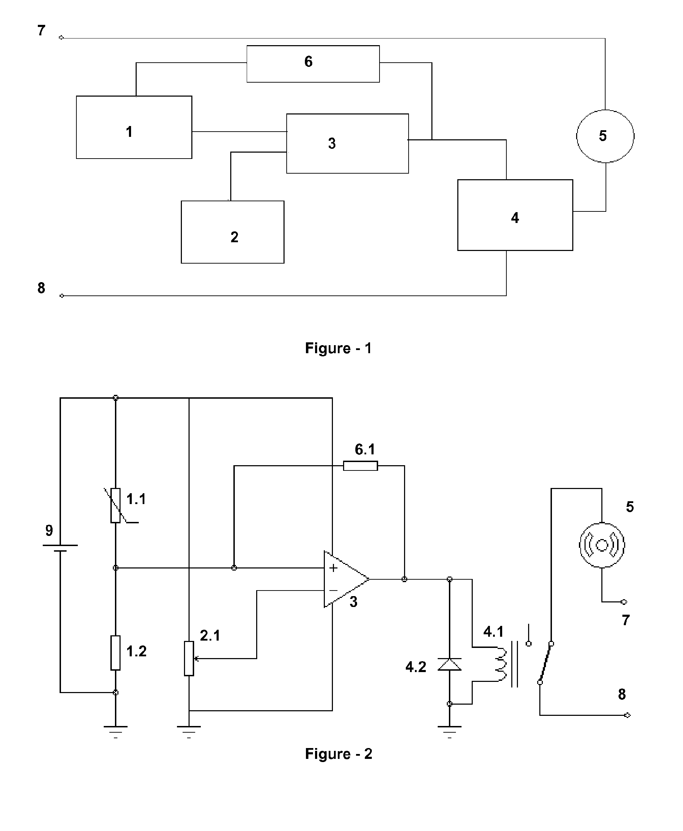

The block diagram of the said thermostat is illustrated in Figure 1. The circuit element used as the operational amplifier (3), compares the data sent from the temperature detection circuit (1) and from temperature adjustment circuit (2) that can be adjusted depending on the user's demand. The switching circuit (4) switches on or off depending on the operational amplifier (3) output.

If the value obtained from the temperature detection circuit (1) is greater than the value adjusted by the temperature adjustment circuit (2), the switching circuit (4) ensures the operation of the heating or cooling element (5), if it is less than the said value, it ensures the stop of the heating or cooling element (5) by means of a relay provided on the switching circuit (5). Triac or thyristor can also be used instead of the relay. (These are referred below as circuit switching elements (4.1))

Feedback circuit (6) changes the voltage on the electronic elements on the temperature detection circuit (1) depending on the voltage at the output of the operational amplifier (3). Thus, it is ensured that the heating or cooling element (5) is fed from the mains (7, 8) within a desired temperature range.

The circuit diagram of the thermostat of this present invention is illustrated in Figure 2. The operational amplifier (3) here has two inputs being negative and positive, and an output. The output of the operational amplifier changes depending on voltage value, whichever is greater, at the positive and negative inputs forming the inputs of the operational amplifier (3). In other words, at the output, a voltage having the value of the power supply (9) is obtained if positive input is greater; zero volt voltage is obtained at the output if the negative input is greater. Making use of this feature of the operational amplifier (3), a certain resistance value is obtained according to a temperature detector (1.1) disposed in the white good and an instantaneous temperature value. This detector (1.1) is connected to the positive input of the operational amplifier (3).

The adjustable resistor (2.1) is connected to the negative input of the operational amplifier (3) and can be adjusted to the temperature range within which the white good is desired to operate. PTC (Positive Temperature Coefficient) or NTC (Negative Temperature Coefficient) or RTD (Resistance Temperature Detector) type detectors can be used as temperature detectors (1.1) in the art disclosed in the invention. The resistance of the PTC and RTD type detectors increases with an increase in the temperature and decreases when the temperature drops, whereas the resistance of NTC type detectors decreases with the increasing temperature and increases as the temperature decreases..

For instance; since the resistance of the NTC type (1.1) temperature detector is quite low at the moment that the thermostat is started at room temperature, the voltage on a voltage divider (1.2) which is serially connected to the temperature detector (1.1) will be greater than the voltage value generated by the user by means of the adjustable resistor (2.1). Therefore, the output voltage of the operational amplifier (3) is equal to the power supply (9) voltage. In this case, the switching element (4.1) takes closed circuit position and the heating or cooling element (5) begins to be supplied from the mains (7, 8).

If a cooling element (5) is used, the resistance of the NTC temperature detector (1.1) increases as cabin internal temperature of the white good drops after a while. Therefore, the voltage on the voltage divider (1.2) which is serially connected to the said detector (1.1) begins to decrease. At the moment that this voltage value is less than the voltage value generated by the user by means of adjustable resistor (2.1), the operational amplifier (3) output is zero volts. In this case, the switching element (4.1) takes open circuit position and mains (7, 8) supply of the cooling element (5) is cut off. Meanwhile, the feedback resistor (6.1) becomes parallel connected to the voltage divider (1.2) electrically. Accordingly, the voltage on the voltage divider (1.2) becomes less than the voltage generated by the user by means of the adjustable resistor (2.1).

As the cooling element (5) stops, the cabin internal temperature begins to rise again and the voltage on the voltage divider (1.2) increases as the resistance of the temperature detector (1.1) drops. At the moment that this value is greater than the voltage value generated by the user by means of the adjustable resistor (2.1), the operational amplifier (3) output voltage is equal to the power supply (9). Belonging to the input power supply (9), the voltage value at the operational amplifier (3) output becomes serially connected to the feedback resistor.

The voltage on the voltage divider (1.2) becomes greater than the voltage value generated by the user by means of the adjustable resistor (2.1). The cooling process continues cyclically.

Thus, by means of this thermostat, internal environment temperature for white goods is adjusted between the predetermined temperatures. As an alternative embodiment of the system, a thermostat operating in the same way can be formed by changing the inputs of the operational amplifier (3) and using PTC or RTD type temperature detector.

In addition, in order that the counter electromotor force that will be generated in the coil of the switching element (4.1) does not affect the operational amplifier (3), a protection diode positioned on the reverse side is used (4.2). It is also possible to use LED (Light Emitting Diode) as diode (4.2).

Furthermore, the feedback resistor (6.1) can be used as an adjustable resistor to enable the user to change the temperature sensitivity.

Alternatively, a microprocessor can be used as an operational amplifier instead of the operational amplifier (3). In this case, a circuit element such as transistor is used for conveying the appropriate voltage value to the switching element (4.1) that enables the heating or cooling element (5) to stop or run. Apart from this, there occurs no change in the other circuit elements used in the above mentioned operational amplifier circuit and electrical cycle operates as described above.

## Claims

1. A white good comprising a heating/cooling element (5); a switching circuit (4) that regulates the feeding of this element (5) from the mains (7, 8); a thermostat checking this circuit for adjustment of the cabin internal temperature **characterized in that** the said thermostat comprises
at least a temperature detector (1.1) whose resistance changes with temperature;
a voltage divider (1.2) serially connected with the temperature detector (1.1); an adjustable resistor (2.1);
an operational amplifier (3), one of the inputs of which is connected between the temperature detector (1.1) and voltage divider (1.2) and the other is connected to the adjustable resistor (2.1) and output of which is connected to the switching circuit (4);
a feedback resistor (6.1) connected parallel to the amplifier (3) so as to be between the output of the operational amplifier (3) and the input coming from the detector (1.1);
a power supply (9) feeding the circuit elements.

2. A white good according to Claim 1 **characterized in that** the temperature detector (1.1) is a NTC type detector.

3. A white good according to Claim 1 **characterized in that** the temperature detector (1.1) is a PTC type detector.

4. A white good according to Claim 1 **characterized in that** the temperature detector (1.1) is a RTD type detector.

5. A white good according to Claim 1 **characterized in that** the feedback resistor (6.1) is an adjustable resistor.

6. A white good according to Claim 1 **characterized in that** there is provided a relay as a switching element (4.1) in the switching circuit (4).

7. A white good according to Claim 1 **characterized in that** there is provided a triac as a switching element (4.1) in the switching circuit (4).

8. A white good according to Claim 1 **characterized in that** there is provided a thyristor as a switching element (4.1) in the switching circuit (4).

9. A white good according to Claim 1 **characterized in that** there is provided a protection diode in the switching circuit (4).

10. A white good according to Claim 9 **characterized in that** the protection diode is LED.

11. A white good according to Claim 1 **characterized in that** microprocessor is used instead of operational amplifier (3).
